Europäisches Patentamt

European Patent Office

Office européen des brevets

(19)

(11) Veröffentlichungsnummer : **0 139 626**
**B1**

(12)

# EUROPÄISCHE PATENTSCHRIFT

(45) Veröffentlichungstag der Patentschrift :
07.03.90

(51) Int. Cl.⁵ : **B 01 D 53/26, B 01 D 53/14**

(21) Anmeldenummer : 84890165.8

(22) Anmeldetag : 06.09.84

(54) Verfahren und Vorrichtung zur Gewinnung von Wärme aus wasserdampfhältigen Gasen durch Absorption oder Adsorption.

(30) Priorität : 29.09.83 AT 3462/83

(43) Veröffentlichungstag der Anmeldung :
02.05.85 Patentblatt 85/18

(45) Bekanntmachung des Hinweises auf die Patenterteilung : 07.03.90 Patentblatt 90/10

(84) Benannte Vertragsstaaten :
AT CH DE FR GB LI SE

(56) Entgegenhaltungen :
EP--A-- 0 045 210
EP--A-- 0 080 542
DE--C-- 668 575
US--A-- 3 230 689
US--A-- 3 960 519

(73) Patentinhaber : SIMMERING-GRAZ-PAUKER AKTIEN-GESELLSCHAFT
Brehmstrasse 16
A-1110 Wien (AT)

(72) Erfinder : Stubenvoll, Josef, Dipl.-Ing.
Laaerstrasse 1
A-2170 Poysdorf (AT)

(74) Vertreter : Köhler-Pavlik, Johann, Dipl.-Ing.
Margaretenplatz 5
A-1050 Wien (AT)

EP 0 139 626 B1

## Beschreibung

Die Erfindung betrifft ein Verfahren und eine Vorrichtung zur Gewinnung von Wärme aus wasserdampfhältigen Gasen durch Absorption oder Adsorption mit anschließender Desorption, wobei zumindest ein Teil des Wasseranteils der Gase abgetrennt wird. Die Rauchgasnachbehandlungsanlage kann beispielsweise eine Rauchgasentschwefelungsanlage sein.

Ein Verfahren und eine Vorrichtung zum Entfeuchten von Gasen, z. B. Luft, durch Absorption ist durch die DE-C 668 575 bekannt, wobei die gebildete Absorptionswärme abgeführt wird.

Die Erzeugung eines Inertgases ist Aufgabe der US-A 3 960 519, wobei durch ein Absorptionsmittel das Rauchgas eines Brenners als inertes Gas entfeuchtet wird und das Absorptionsmittel zumindest teilweise durch die Wärme des Rauchgases vor der Absorptionsanlage regeneriert wird.

Rauchgasentschwefelungsanlagen mit Naßwäschern, Sprühtrocknern od. dgl. können zwar mit einem hohen Entschwefelungsgrad von 90 % und darüber arbeiten. Die Rauchgase verlassen aber die Reinigungsanlage mit einer Temperatur von 45 bis 65 °C, wobei sie mit Wasserdampf gesättigt oder zumindest angereichert sind.

Die Wiederaufheizung ist erforderlich, da das Reingas mit einer, zumeist gesetzlich vorgeschriebenen Mindesttemperatur von 80 bis 100 °C aus dem Schornstein der Kraftwerke zum Erzielen günstiger Ausbreitungsbedingungen austreten muß.

Eine der bekannten Möglichkeiten zur Wiederaufheizung der Reingase besteht darin, daß ein Teilstrom des heißen Rohgases vor dem Eintritt in die Rauchgasentschwefelungsanlage abgezweigt und den Reingasen beigemengt wird, wodurch jedoch der Entschwefelungsgrad in nachteiliger Weise herabgesetzt wird.

Eine zweite Möglichkeit besteht darin, daß dem abgekühlten Reingas ein heißes Rauchgas beigemengt wird, welches ein mit Erdgas oder schwefelarmem Heizöl befeuerter Brenner liefert. Abgesehen vom zusätzlichen Energieaufwand, kommt es beim Einsatz eines solchen Brenners zu instabilen Verbrennungsrückständen, Rußbildung und schlechter Durchmischung zwischen dem kalten und heißen Gasstrom, wodurch die Ausbreitung in der Atmosphäre nachteilig beeinflußt wird. Zusätzlich kommt es zu einer Vergrößerung des Reingasvolumens und zu einer Verminderung des Gesamtwirkungsgrades.

Eine dritte Möglichkeit besteht im Einsatz eines rekuperativen Wärmetauschers, z. B. in Form eines Drehgasvorwärmers, keramische Speichermassen oder konventioneller Wärmetauscher mit Wärmeträgermedium, bei welchen ein Wärmeaustausch zwischen dem heißen Rohgas und dem abgekühlten Reingas stattfindet. Derartige Wärmetauscher neigen jedoch zu Anbackungen bzw. Verstopfungen, die durch mitgeführte Tröpfchen des von der Rauchgasentschwefelungsanlage kommenden Reingases verursacht werden. Außerdem arbeiten diese Wärmetauscher im Bereich des Säuretaupunkts der Rauchgase, wodurch Korrosionsprobleme entstehen.

Es wurden auch rekuperativ arbeitende Wärmetauscher vorgeschlagen, welche mit dem erzeugten Heißdampf betrieben werden. Auch hier treten Korrosions- und Ablagerungsprobleme auf.

Aufgabe der Erfindung ist die Schaffung eines neuen Verfahrens und einer neuen Vorrichtung zur Gewinnung von Wärme aus wasserdampfhältigen Gasen, die insbesondere zur Wiederaufheizung von Reingasen dienen, wobei die Nachteile der bekannten Verfahren und Vorrichtungen vermieden und eine positive Energiebilanz erzielt werden soll, d. h. zusätzliche Nutzenergie gewonnen werden kann.

Das Verfahren der eingangs genannten Art sieht erfindungsgemäß vor, daß die Rauchgase durch einen Wärmetauscher zur Vorwärmung der Verbrennungsluft geführt und anschließend zumindest teilweise in eine Rauchgasreinigungsanlage eingeleitet werden, von welcher die gereinigten und wasserdampfangereicherten Rauchgase in eine Ab- bzw. Adsorptionsanlage eingebracht werden, wo die, bei der Ab- bzw. Adsorption freiwerdende Wärme in wählbarem Verhältnis an die Rauchgase und bzw. oder das Ab- bzw. Adsorptionsmittel abgegeben und im Kesselsystem und bzw. oder extern genutzt wird und anschließend das im Ab- bzw. Adsorptionsmittel aufgenommene Wasser durch Desorption in Dampfform ausgetrieben und dessen Wärmeinhalt im Kesselsystem und bzw. oder extern genutzt wird, wobei der Wasserdampf kondensiert und das Kondensat in die Rauchgasreinigungsanlage zur Wiederverwendung rückgeführt wird.

Das Austreiben des im Absorptions- oder Adsorptionsmittel aufgenommenen Wassers in Dampfform erfolgt durch Kochen, Strippen oder Druckerniedrigung, wobei als Absorptionsmittel wässrige Lösungen von Salzen, insbesondere Alkalihalogenide wie beispielsweise LiCl, LiJ, LiBr, NaCl, NaBr, NaJ, KBr, KCl, KJ, weiters beispielsweise von Nitraten, Perchloraten, saure wässrige Lösungen von Säuren oder Blasen wie z. B. Alkalihydroxide, und als Adsorptionsmittel physikalisch wirkende Feststoffe wie Aktivkohle, Silikagel oder Molekularsiebe verwendet werden.

Zumindest ein Teil der zur Desorption erforderlichen Wärme kann, wie aus der US-A 3 960 519 bekannt, mittels Wärmetauscher aus den Rauchgasen selbst stammen. Sie kann aber auch, gemäß weiteren Ausgestaltungen des erfindungsgemäßen Verfahrens, aus anderen Teilen des Kesselsystems der Verbrennungsanlage bzw. Abgasanlage, deren Rauch- bzw. Abgase nachbehandelt werden, stammen, z. B. von der Verbrennungsluft nach einem Luftvorwärmer, oder vom Dampf des Kesselsystems. Zumindest ein Teil der zur Desorption erforderlichen Wärme kann erfindungsgemäß auch aus Abwärme, z. B. vom Abdampf nach einer Turbine oder vom Rauchgas nach dem Luftvorwärmer gewonnen werden. Letztlich kann zumindest ein Teil der zur Desorption erforderlichen Wärme erfindungsgemäß aus Fremdenergie gewonnen werden, z. B. von einen Öl- oder Gasbrenner, von einer Elektroheizung, aus Fremddampf oder von der Umgebungswärme, im letzten Fall gegebenenfalls über eine Wärmepumpe.

Der bei der Desorption entstehende Wasserdampf wird erfindungsgemäß dem Kesselsystem zugeführt, wo er entweder zur Vorerwärmung der Verbrennungsluft, oder zur Speisewasservorwärmung des Kesselsystems verwendet wird. Der entstehende Wasserdampf kann auch einer Rauchgasnachbehandlungsanlage nach dem Kesselsystem zugeführt werden, wo er entweder zur Aufheizung der Rauchgase vor einem Schornstein oder zur Lieferung der Prozeßwärme für die Rauchgasnachbehandlungsanlage verwendet wird. Der entstehende Wasserdampf kann auch einem externen Wärmeverbraucher für Heizzwecke zugeführt oder zur Wärmeabgabe an Luft oder Kühlwasser verwendet werden. In allen Fällen wird der Wasserdampf während der Wärmeabgabe kondensiert und das kondensierte Wasser der Rauchgasnachbehandlungsanlage zugeführt.

Die bei der Absorption oder Adsorption freigesetzte Wärme wird erfindungsgemäß dem Kesselsystem zugeführt, wo sie zur Vorerwärmung der Verbrennungsluft oder des Speisewassers verwendet wird, oder die freigesetzte Wärme wird einem Wärmeträgermedium zur externen Nutzung zugeführt. Vorzugsweise erfolgt dies durch einen Wärmetausch zwischen der Verbrennungsluft und/oder des Speisewassers und/oder des Wärmeträgermediums einerseits und dem Absorptions- oder Adsorptionsmittel vor der Absorption bzw. Adsorption oder einem Gemisch aus Rauchgas und Absorptions- oder Adsorptionsmittel oder dem Rauchgas nach der Absorption bzw. der Adsorption anderseits.

Die Abtrennung des Wassers aus dem Rauchgas könnte auch durch Kondensation erfolgen, wobei das primäre Wärmeträgermedium entweder ein Kältemittel sein kann, oder das primäre Wärmeträgermedium kann die Wärme an ein Kältemittel abgeben. Die vom Kältemittel aufgenommene Wärme kann beispielsweise über einen Wärmepumpenprozeß gemeinsam mit der beim Wärmepumpenprozeß zugeführten Energie an ein Medium abgegeben werden. Die im Medium enthaltene Wärme wird dem Kesselsystem zugeführt, wobei das Medium entweder die vorzuwärmende Verbrennungsluft oder das vorzuwärmende Speisewasser des Kesselsystems ist, oder daß das Medium entweder zur Vorerwärmung der Verbrennungsluft oder zur Speisewasservorwärmung des Kesselsystems verwendet wird. Die im Medium enthaltene Wärme kann auch der Rauchgasnachbehandlungsanlage nach dem Kesselsystem zugeführt werden, wobei entweder das Medium das vor einem Schornstein aufzuheizende Rauchgas ist, oder daß das Medium zur Aufheizung der Rauchgase vor dem Schornstein oder zur Lieferung der Prozeßwärme für die Rauchgasnachbehandlungsanlage verwendet wird. Letztlich kann die im Medium enthaltene Wärme einem externen Wärmeverbraucher für Heizzwecke zugeführt werden. Das als Kondensat anfallende Wasser kann zur Weiterverwendung in einer Rauchgasnachbehandlungsanlage eingesetzt werden. Im Falle einer Abtrennung des Wasseranteils durch Kondensation erfolgt die Druckerniedrigung durch Erzeugung eines Vakuums, wobei die Kondensation des bei der Desorption ausgetriebenen Dampfes durch Fremdkühlung erzeugt wird, und das kondensierte Wasser wieder der Rauchgasnachbehandlungsanlage zugeführt wird.

Vor der Desorption kann auch ein Wärmetausch zwischen den wasserarmen Absorptionsmittel und dem mit Wasser angereicherten Absorptionsmittel stattfinden.

Das Verfahren ist in erster Linie zum Einsatz bei Verbrennungsanlagen vorgesehen. Es kann aber auch bei Abgasanlagen von z. B. Verbrennungsmotoren, bei Strippanlagen mit Wasserdampf als Inertgas, bei Vulkanisieranlagen, etc. eingesetzt werden.

Eine Vorrichtung zur Durchführung des erfindungsgemäßen Verfahrens ist dadurch gekennzeichnet, daß ein Absorber in Form eines Absorptionsturmes und ein Desorber in Form eines Kochers vorgesehen ist, wobei das Absorptionsmittel über zumindest eine Pumpe im Kreislauf zwischen dem Absorptionsturm und dem Kocher zirkuliert.

Des weiteren ist erfindungsgemäß vorgesehen, daß im Kreislauf des Absorptionsmittels zwischen dem Absorptionsturm und dem Kocher ein Wärmetauscher vorgesehen ist. Zweckmäßig ist der Absorptionsturm zwischen einer Rauchgasnachbehandlungsanlage und einem Schornstein angeordnet, wobei die Rauchgasnachbehandlungsanlage als Rauchgasentschwefelungsanlage ausgeführt ist.

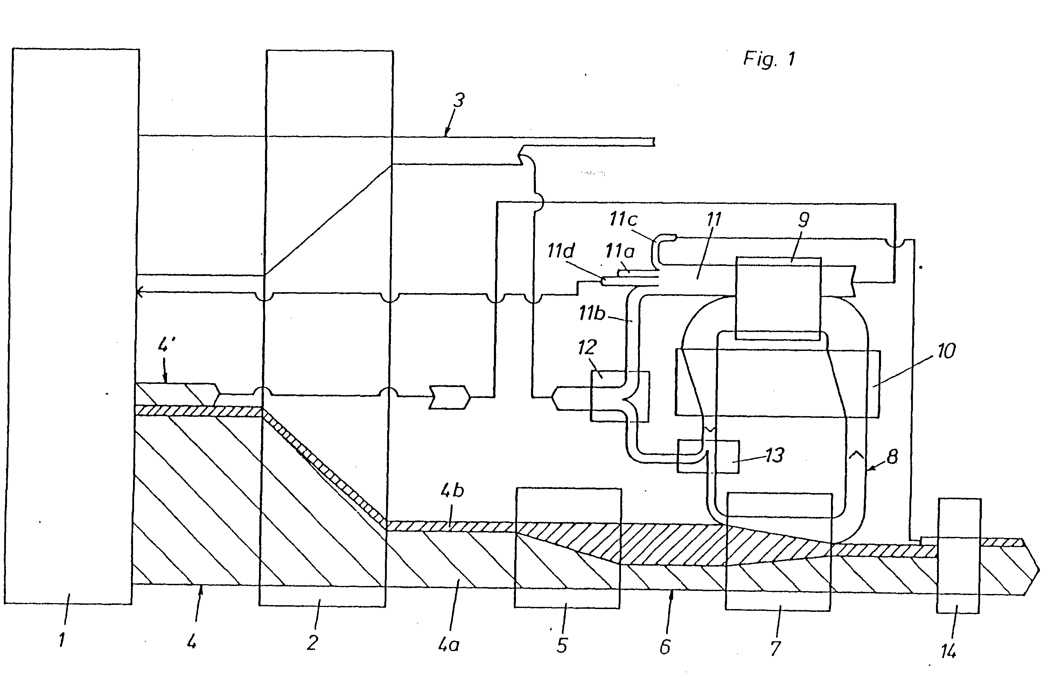

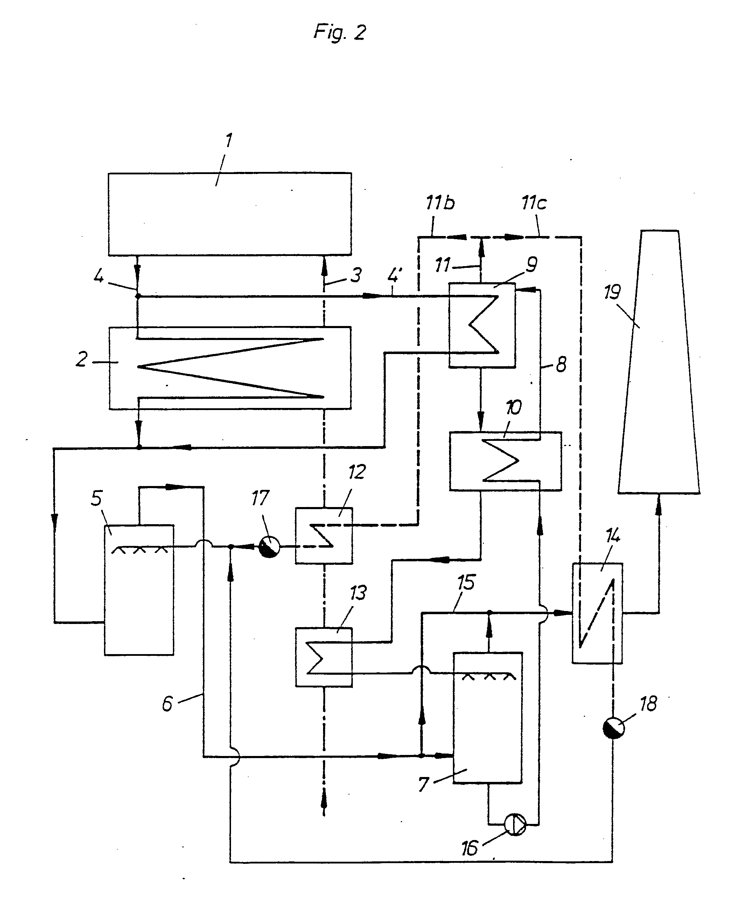

Die Erfindung wird nachfolgend anhand der Figuren erläutert, in welchen u. a. bevorzugte Ausführungsbeispiele dargestellt sind. Es zeigen Fig. 1 ein Wärmeflußbild zur Erläuterung der Erfindung, und Fig. 2 bis 10 Blockschemas bevorzugter Ausführungsbeispiele von Anlagen zur Wiederaufheizung von Reingasen gemäß der Erfindung.

Im Wärmeflußbild nach Fig. 1 bezeichnet 1 den Kessel einer Heizanlage, welcher ein Luftvorwärmer 2 bekannter Bauart vorgeschaltet ist, d. h. im Luftvorwärmer 2 wird die Verbrennungsluft 3 durch die aus dem Kessel austretenden heißen Rohgase 4 erwärmt. Die Rohgase treten beispielsweise mit einer Temperatur von 350 °C in den Luftvorwärmer 2 ein und verlassen diesen mit einer Temperatur von ca. 130 °C mit einem Wasserdampfgehalt von ca. 7 Vol.%. Die nach dem Luftvorwärmer 2 im Rohgas 4 enthaltene Wärmemenge gilt bei herkömmlichen Anlagen als Rauchgasverlust. Sie setzt sich im wesentlichen aus zwei Komponenten zusammen, der Wärmemenge 4a des trockenen Anteils (grobschraffierte Fläche) und der Verdampfungswärme 4b des Wasserdampfanteils (feinschraffierte Fläche). Der Luftvorwärmer 2 wird somit als zum Kesselsystem gehörend betrachtet. In der nachfolgenden Rauchgasentschwefelungsanlage 5 in Form eines Naßwäschers oder Sprühtrockners od. dgl. wird die Rauchgastemperatur durch Zugabe von Wasser in den Rauchgasstrom gesenkt. Die ursprünglich im trockenen Anteil vorhandene Wärmemenge 4a wird geringer, während der Wasserdampfanteil und damit dessen Verdampfungswärmemenge 4b zunimmt.

Am Ausgang der Rauchgasentschwefelungsanlage 5 ist eine erfindungsgemäße Vorrichtung zur Wiederaufheizung der abgekühlten Reingase 6 vorgesehen, die in diesem Ausführungsbeispiel als Absorber in Form eines Absorptionsturms 7 ausgeführt ist. Im Absorptionsturm 7 befindet sich ein Absorptionsmittel 8, welches einen Teil des Wasserdampfes der Reingase aufnimmt, d. h. absorbiert. Die bei der Absorption freiwerdende Wärme bewirkt einerseits ein Ansteigen der Temperatur der Reingase im Absorptionsturm 7. Anderseits wird Wärme an das Absorptionsmittel 8 abgegeben, welches im Kreislauf zwischen dem Absorptionsturm 7 und einem Desorber, z. B. in Form eines Kochers 9 zirkuliert. Zusätzlich kann Wärme an ein Medium abgegeben werden, d. h. es kann beispielsweise die Verbrennungsluft, das Speisewasser für den Kessel oder sonstige Medien von Niedertemperatur-Wärmeverbrauchern (z. B. Wärmepumpe) erwärmt werden. Im Kocher 9 wird das im Absorptionsmittel 8 gelöste Wasser wieder ausgetrieben, d. h. verdampft. Die dazu erforderliche Wärmemenge wird beispielsweise zum Teil von einem abgezweigten Teil 4' der aus dem Kessel 1 austretenden heißen Rohgase 4 geliefert, während der andere Teil beispielsweise durch die freiwerdende Lösungswärme selbst geliefert werden kann, die beim Ausdampfen des Wassers im Kocher 9 wieder frei wird, wodurch weniger Wärme benötigt wird, als zum Verdampfen der gleichen Menge an reinem Wasser erforderlich wäre. Die zur Desorption erforderliche Wärmemenge kann auch einem Teilstrom der heißen Verbrennungsluft nach dem Luftvorwärmer 2, einem Luftstrom aus einem eigenen Heißgaserzeuger, einem Dampfnetz, oder einer sonstigen Wärmequelle entnommen werden. Um die Zufuhr zusätzlicher Wärmeenergie zu verringern, kann ein interner Wärmetauscher 10 im Kreislauf zwischen Absorberturm 7 und Kocher 9 vorgesehen sein.

Die im Kocher 9 freiwerdende Dampfwärmemenge 11 kann in mehrfacher Weise verwendet werden. Ein Anteil 11a kann beispielsweise als Nutzwärme (Heizzwecke, Prozeßwärme) verwendet werden. Ein anderer Anteil 11b kann in einem Wärmetauscher 12 zur Erwärmung der Verbrennungsluft 3 verwendet werden. Dem Wärmetauscher 12 kann über einen weiteren Wärmetauscher 13 die noch überschüssige, freigewordene Lösungswärme des Absorptionsmittels 8 zugeführt werden. Die vom Wärmetauscher 12 an die Verbrennungsluft 3 abgegebene Wärmemenge dient somit als Ausgleich für die Wärmemenge des abgezweigten Teils 4' der heißen Rohgase.

Ein weiterer Anteil 11c der Dampfwärmemenge 11 kann einem, dem Absorptionsturm 7 nachgeschalteten Wärmetauscher 14 zugeführt werden, um bei Bedarf die Temperatur der Reingase noch weiter zu erhöhen, bevor diese in den Schornstein treten. Darüberhinaus kann ein Anteil 11d zur Speisewasservorwärmung im Kessel 1 verwendet werden.

Die wesentlichen Vorteile des erfindungsgemäßen Verfahrens sind somit :

1. Gewinnung von Nutzenergie in Form von Niederdruckdampf und/oder vorgewärmter Luft.
2. Es gelangt keine zusätzliche Verunreinigung in das Reingas.
3. Es erfolgt eine Volumsverkleinerung des Reingasstroms.
4. Es ist kein Wärmetauscher im Rauchgasstrom erforderlich, der im Säuretaupunktbereich arbeitet.
5. Der Wärmeübergang im Absorber und/oder Desorber erfolgt vorzugsweise direkt.
6. Das Kondensat des im Kocher 9 ausgetriebenen Dampfes kann in der Rauchgasentschwefelungsanlage 5 zur Einspritzung wiederverwendet werden.

In den Blockschemas nach Fig. 2 bis 8 sind die Rauch- bzw. Reingas führenden Leitungen mit dicken vollen Linien dargestellt, die Verbrennungsluft führenden Leitungen mit strichpunktierten Linien, die das Absorptionsmittel bzw. Kondensat führenden Leitungen mit dünnen vollen Linien, und die den Dampf führenden Leitungen mit strichlierten Linien, wobei gleiche Anlagenteile mit gleichen Bezugszeichen versehen sind.

Unter Anlagenteile sind zu verstehen : Absorber, Desorber, Wärmetauscher, Pumpen, Gebläse, Armaturen, Kondensatableiter usw.

Der Absorber ist vorzugsweise als Kontaktapparat ausgeführt, der je nach Anwendungsfall als Bodenkolonne mit z. B. Siebböden, Glockenböden, Ventilböden, Tunnelböden, Rostböden od. dgl. oder z. B. als Rieselabsorber, Sprühabsorber, Füllkörperkolonne oder Dickschichtabsorber ausgebildet sein kann.

Der Desorber ist vorzugsweise als Wärmetauscher mit z. B. nachgeschalteten Bodenkolonnen, Rieseltürmen, Dickschichtdesorbern, Sprühtürmen, Füllkörperkolonnen ausgebildet.

Die angeführten Absorber- bzw. Desorberarten können untereinander — je nach Anwendungsfall — beliebig kombiniert werden. Bevorzugte Kombinationsmöglichkeiten sind in den Figuren 2 bis 10 dargestellt.

Als Desorptionsverfahren gelangen zum Einsatz :

1. Auskochen
Die Desorption erfolgt durch Erwärmung des Absorptionsmittels.
2. Strippen
Die Desorption erfolgt durch Absenken des Partialdruckes des sich über dem Absorptionsmittel befindlichen Wasserdampfs durch Zumischung inerter Gase, z. B. Heißluft, trockene Rauchgase etc.

3. Druckerniedrigung

Die Desorption erfolgt durch Druckerniedrigung im Raum oberhalb des Absorptionsmittels, z. B. mittels einer Vakuumpumpe oder mittels eines Dampfkondensators.

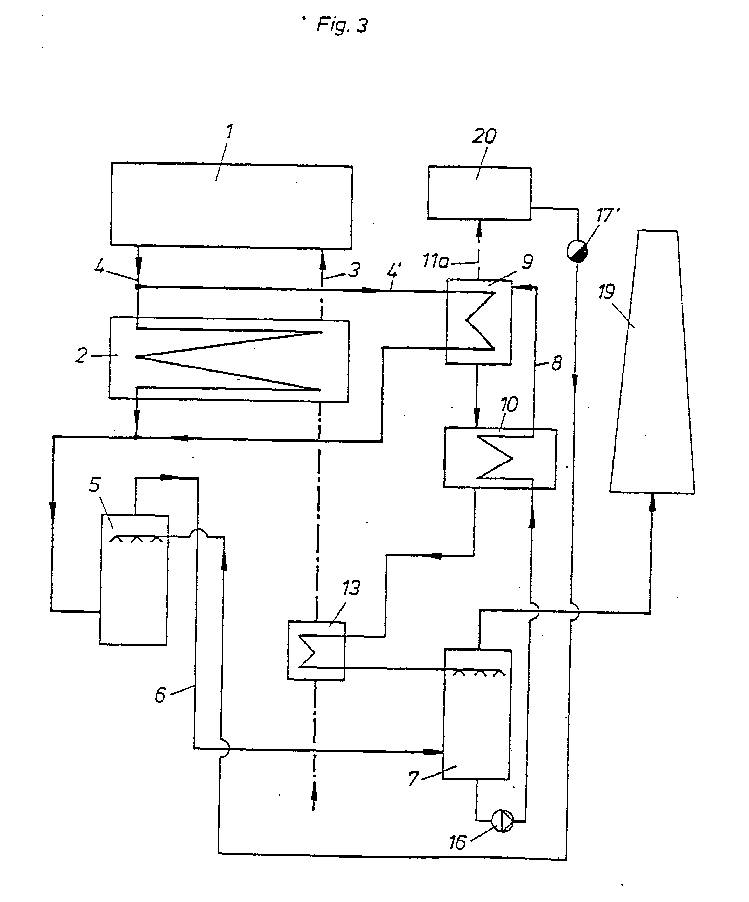

Das Blockschema nach Fig. 2 zeigt eine erste Variante einer Anlage zur Wiederaufheizung der Reingase nach dem Verlassen der Rauchgasentschwefelungsanlage. Es handelt sich hiebei um eine Variante die sich insbesondere für E-Kraftwerke eignet. Die vom Kessel 1 kommenden heißen Rohgase 4 werden beispielsweise zu 90 Vol.% in den Luftvorwärmer 2 geleitet. 10 Vol.% werden als Anteil 4' dem Kocher 9 zur Aufheizung des Absorptionsmittels 8 zugeführt und anschließend wieder dem aus dem Luftvorwärmer 2 austretenden Rohgasstrom beigemengt, so daß das gesamte Rohgasvolumen der Rauchgasentschwefelungsanlage 5 zugeführt wird. Bei diesem Beispiel sowie bei den Beispielen nach Fig. 3 bis 9 kann zwischen dem Luftvorwärmer 2 und der Rauchgasentschwefelungsanlage 5 oder zwischen dem Kessel 1 und dem Luftvorwärmer 2 ein E-Staubfilter (nicht dargestellt) vorgesehen sein. Die aus der Rauchgasentschwefelungsanlage 5 austretenden abgekühlten Reingase werden beispielsweise zu 65 Vol.% dem Absorptionsturm 7 zugeführt, während die restlichen 35 Vol.% über eine Bypaßleitung 15 geleitet und anschließend den aus dem Absorptionsturm 7 austretenden wiedererhitzten Reingasen beigemengt werden. Der im Kocher 9 erzeugte Niederdruckdampf 11 wird einerseits als Anteil 11b einem Wärmetauscher 12 zugeführt, welcher vor dem Luftvorwärmer 2 angeordnet ist, und anderseits als Anteil 11c einem Wärmetauscher 14 zugeführt, welcher zur Nacherwärmung der Reingase am Ausgang des Absorptionsturms 7 angeordnet ist. Im geschlossenen Kreislaufsystem des Absorptionsmittels 8 ist eine Pumpe 16 am Absorptionsmittel-Ausgang des Absorptionsturms 7 vorgesehen, die das an Wasser angereicherte Absorptionsmittel über den internen Wärmetauscher 10 in den Kocher 9 pumpt. Vom Kocher 9 gelangt das wasserarme Absorptionsmittel wieder über den internen Wärmetauscher 10 zu einem Wärmetauscher 13, der zur Vorerwärmung der Verbrennungsluft 3 dient und wird anschließend in den Absorptionsturm 7 rückgeleitet. Der dem Wärmetauscher 13 nachgeschaltete Wärmetauscher 12 erwärmt die Verbrennungsluft 3 noch weiter, bevor diese in den Luftvorwärmer 2 eintritt, wo sie auf die gewünschte Endtemperatur gebracht wird. Am Ausgang des Primärkreislaufs des Wärmetauschers 12 ist ein Kondensatableiter 17 angeordnet. Desgleichen ist am Ausgang des Primärkreislaufs des Wärmetauschers 14 ein Kondensatableiter 18 vorgesehen. Das kondensierte Wasser beider Kondensatableiter 17 und 18 wird der Rauchgasentschwefelungsanlage 5 zugeführt. Die wiedererhitzten Reingase 6 verlassen den Wärmetauscher 14 und treten über den Schornstein 19 in die Atmosphäre.

Das Blockschema nach Fig. 3 zeigt eine zweite Variante einer Anlage zur Wiederaufheizung der abgekühlten Reingase, die sich insbesondere zum Einsatz bei einem Heizkraftwerk eignet, wobei ein großer Anteil 11a an Nutzwärme in Form von Niederdruckdampf erhalten wird. Bei der Variante nach Fig. 3 werden z. B. ca. 30 Vol.% der aus dem Kessel austretenden Rohgase 4 als Anteil 4' dem Kocher 9 zugeführt, während die restlichen 70 Vol.% zum Luftvorwärmer gelangen. Die Wärmetauscher 12 und 14 sowie die Bypaßleitung 15 nach Fig. 2 entfallen bei diesem Beispiel. Der gesamte aus dem Kocher 9 austretende Dampf 11a wird einem Niederdruckdampfverbraucher 20 zugeführt und dessen Kondensat über einen Kondensatableiter 17' wieder der Rauchgasentschwefelungsanlage 5 zur Wiedereinspritzung zugeleitet. Der sonstige Aufbau bzw. die Leitungsführung ist mit dem Beispiel nach Fig. 2 dient, so daß sich eine genauere Beschreibung erübrigt. Anstelle der Beheizung des Kochers 9 nach Fig. 3 durch die heißen Rohgase 4' kann auch eine Fremdbeheizung mit Niederdruckdampf, Heizgas oder elektrischer Energie erfolgen.

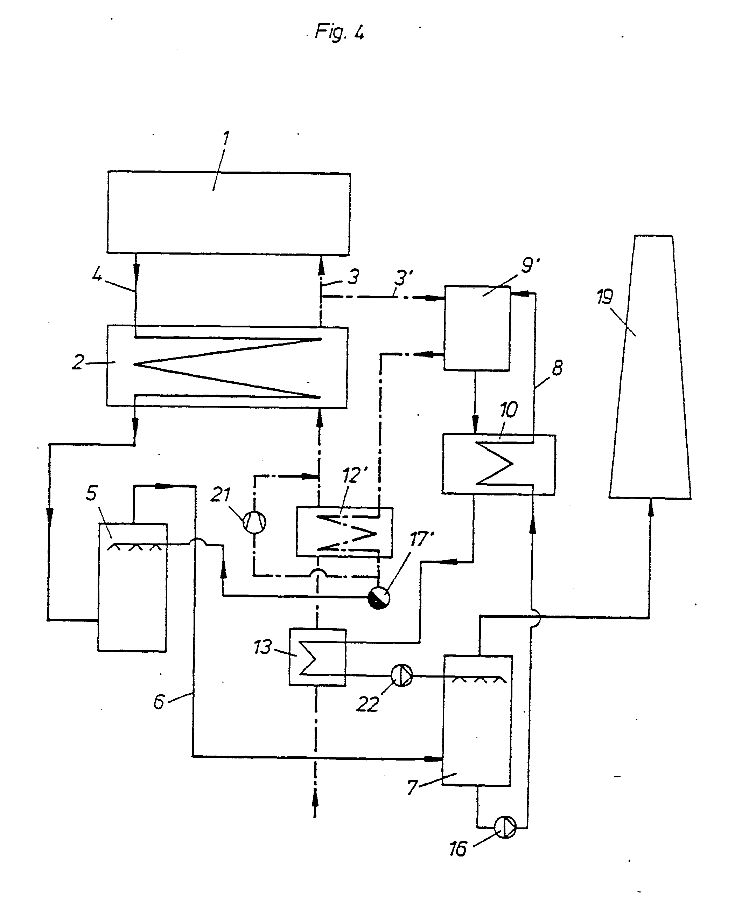

Die dritte Variante gemäß der Erfindung nach Fig. 4 eignet sich wieder vorzugsweise zum Einsatz bei E-Kraftwerken. Bei dieser Variante wird der gesamte aus dem Kessel 1 kommende Rohgasanteil dem Luftvorwärmer 2 zugeführt. Der Desorber 9' wird mit Heißluft 3' beschickt, welche von der Verbrennungsluft 3 abgezweigt wird. Das aus dem Desorber 9' austretende Heißluft-Dampfgemisch wird zum Wärmetauscher 12' zur Zwischenerhitzung der Verbrennungsluft 3 geleitet, welche durch den Wärmetauscher 13 vorerwärmt wird. Am Ausgang des Primärkreislaufs des Wärmetauschers 12' ist ein Kondensatableiter 17' vorgesehen, wobei die verbleibende Heißluft in die Verbrennungsluftleitung zwischen dem Wärmetauscher 12' und dem Luftvorwärmer 2 über ein Gebläse 21 eingespeist wird.

Die Rohgase aus dem Luftvorwärmer 2 werden wieder in die Rauchgasentschwefelungsanlage 5 geleitet und gelangen als Reingase zum Absorptionsturm 7, aus dem sie wieder aufgeheizt in den Schornstein 19 eintreten.

Der Kreislauf des Absorptionsmittels gleicht dem nach Fig. 2 oder 3 bis auf den Umstand, daß zusätzlich eine Pumpe 22 in der Leitung zwischen dem Absorptionsturm 7 und dem internen Wärmetauscher 10 vorgesehen ist.

Im Gegensatz zu den in Fig. 2 und 3 angewendeten Verfahren der Desorption durch Auskochen wird beim Beispiel gemäß Fig. 4 die Desorption durch Erwärmung und sogenanntes Strippen ausgeführt. Als Strippgas dient die dem Desorber 9' zugeführte Heißfuft, wobei anstelle der Heißluft doch jede Art von Inertgas verwendet werden kann. Die mit dem Heißluftstrom aus dem Desorber 9' abgeführte Dampfmenge wird im Wärmetauscher 12' kondensiert und das Kondensat wird über den Kondensatableiter 17' abgeleitet und der Rauchgasentschwefelungsanlage 5 zugeführt.

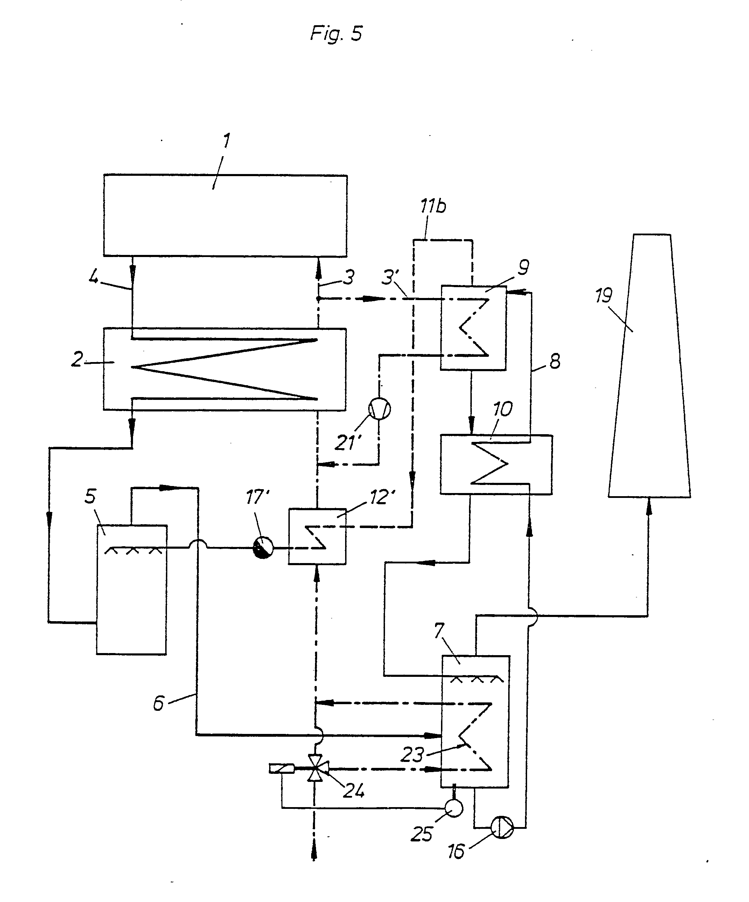

Die vierte Variante nach Fig. 5 eignet sich ebenfalls zum Einsatz bei E-Kraftwerken. Bei dieser Variante dient ein Teil 3' der Verbrennungsluft 3 zur Beheizung des Kochers 9, wobei dieser Teil 3' der Verbrennungsluft vor dem Kessel 1 abgezweigt, über den Kocher 9 geleitet, und über ein Gebläse 21' der Leitung zwischen dem Luftvorwärmer 2 und dem Wärmetauscher 12' rückgeführt wird. Der im Kocher 9 erzeugte Niederdruckdampf 11b wird dem Wärmetauscher 12' zur Luftvorwärmung zugeführt. Das Kondensat wird wieder über den Kondensatableiter 17' zur Rauchgasentschwefelungsanlage 5 geleitet.

Die Kühlung des Absorptionsturms 7 erfolgt in diesem Beispiel durch einen in den Absorptionsturm 7 integrierten Wärmetauscher 23 der zur Vorerwärmung der Verbrennungsluft dient. Über ein steuerbares Dreiwegventil 24 kann die kalte Verbrennungsluft wahlweise zum Wärmetauscher 23 oder direkt zum Wärmetauscher 12' geleitet werden, wobei die Ansteuerung des Dreiwegventils 24 durch einen Thermostaten 25 erfolgt, der im Absorptionsturm 7 angeordnet ist.

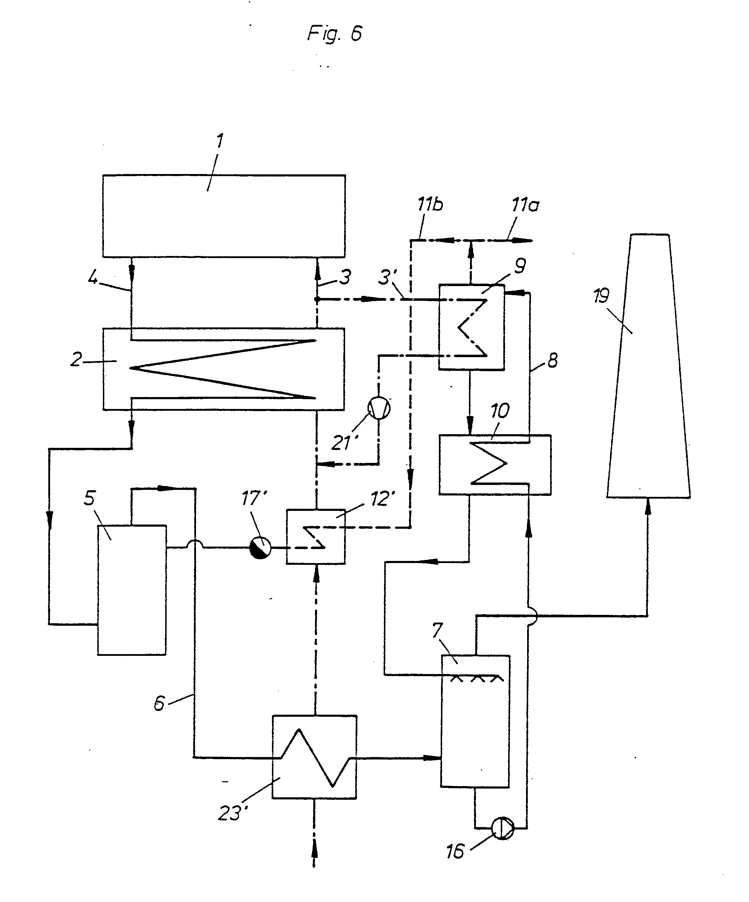

Das Beispiel einer fünften Variante nach Fig. 6 ist mit dem Aufbau nach Fig. 5 nahezu gleich. Anstelle des integrierten Wärmetauschers 23 ist jedoch ein getrennter Wärmetauscher 23' vorgesehen, der die Reingase 6 zur Erhöhung der Absorptionsleistung vor dem Eintritt in den Absorptionsturm 7 abkühlt und dabei die Verbrennungsluft vorerwärmt. Der im Kocher 9 erzeugte Niederdruckdampf wird als Anteil 11b dem Wärmetauscher 12' zur Zwischenerwärmung der Verbrennungsluft zugeführt, während ein zweiter Anteil 11a als Nutzdampf verwendet wird.

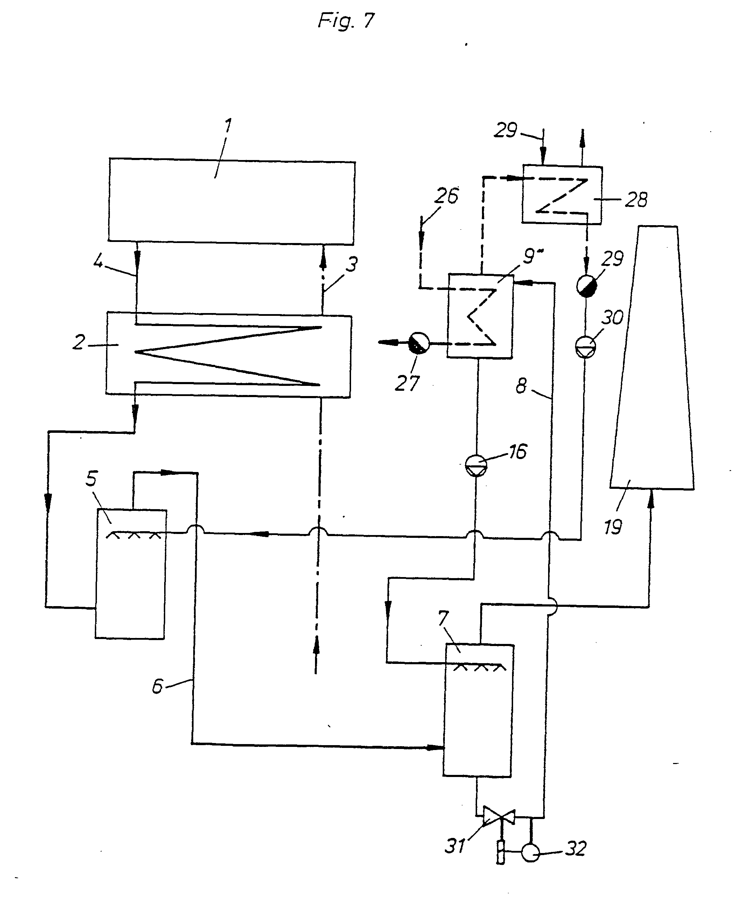

Eine sechste Variante nach Fig. 7 eignet sich insbesondere zum Einsatz bei E-Kraftwerken. Hiebei erfolgt die Erwärmung der Verbrennungsluft nur durch den Luftvorwärmer 2 und die gesamte im Absorberturm 7 freiwerdende Wärme wird an die Reingase 6 abgegeben. Der Desorber 9'' wird fremdbeheizt, z. B. mit dem aus einer Dampfturbine austretenden Abdampf 26, dessen Kondensat nach dem Austritt aus dem Desorber 9'' über einen Kondensatableiter 27 als Speisewasser zum Kessel 1 geleitet wird. Im Desorber 9'' erfolgt die Desorption durch Druckerniedrigung im Raum oberhalb des Absorptionsmittels (Prinzip eines Wärmetransformators). Der Unterdruck wird beispielsweise durch einen an den Desorber 9'' angeschlossenen Kondensator 28 erzeugt, welchem Kühlwasser 29 zugeführt wird. Das aus dem Kondensator 28 austretende Kondensat wird über einen Kondensatableiter 29 und eine Pumpe 30 zur Rauchgasentschwefelungsanlage 5 rückgeleitet. Am Absorptionsmittel-Ausgang des Absorptionsturms 7 ist ein steuerbares Expansionsventil 31 vorgesehen, welches von einem Drucksensor 32 gesteuert wird, der auf den Druck in der Leitung zum Desorber 9'' anspricht. Ist der Druck (absoluter Druck) zu groß, so schließt das Ventil 31, so daß kein Absorptionsmittel 8 zum Desorber 9'' fließen kann. Sinkt der Druck anschliessend auf einen vorbestimmten Wert, so öffnet sich das Ventil 31 wieder, und das Absorptionsmittel 8 fließt zum Desorber 9''.

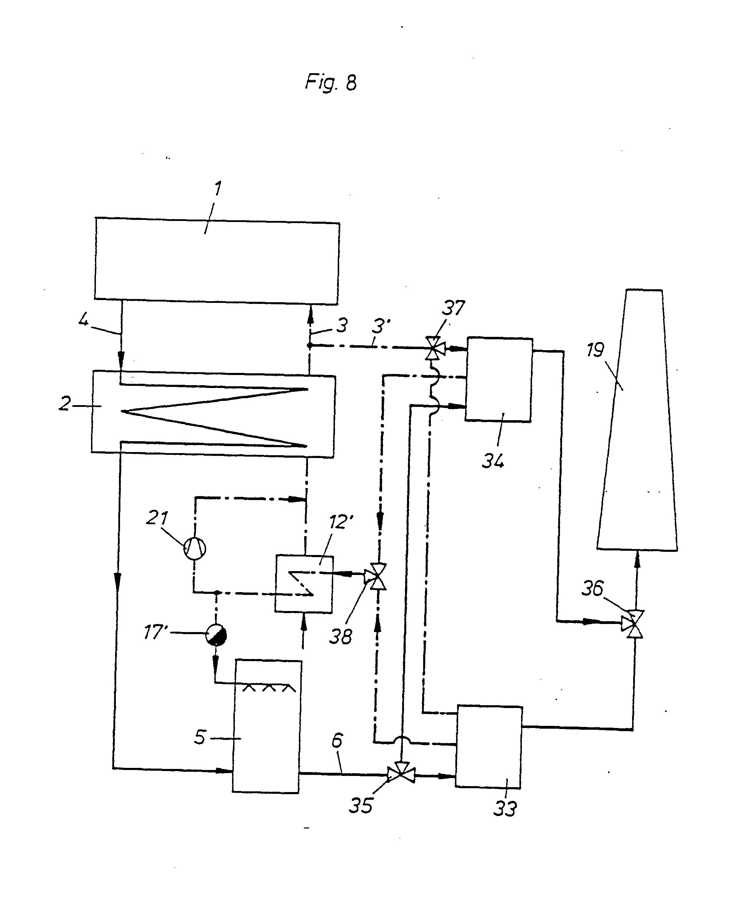

Fig. 8 zeigt eine siebente Variante, die sich ebenfalls zum Einsatz bei E-Kraftwerken eignet, wobei zur Abtrennung des Wasserdampfanteils der Rauchgase ein Adsorptionsverfahren verwendet wird. Zu diesem Zwecke sind in diesem Beispiel zwei Reaktoren 33 und 34 vorgesehen, die das Adsorptionsmittel enthalten. Die von der Rauchgasentschwefelungsanlage 5 kommenden Reingase 6 werden über ein Dreiwegventil 35 zu einem der beiden Reaktoren 33 und 34 geleitet. Die Reingas-Ausgänge der beiden Reaktoren 33 und 34 werden zu einem weiteren Dreiwegventil 36 geführt und treten anschließend in den Schornstein 19. Die beiden Dreiwegventile sind so geschaltet, daß jeweils nur einer der Reaktoren 33 und 34 den Adsorptionsvorgang ausführt, während das Adsorptionsmittel des anderen Reaktors durch Strippen mit Heißluft regeneriert wird. Es erfolgt eine periodische Umschaltung von Adsorption auf Desorption. Die zur Desorption erforderliche Heißluft 3' wird der erwärmten Verbrennungsluft 3 nach dem Luftvorwärmer 2 entnommen und über ein Dreiwegventil 37 zu einem der beiden Reaktoren 33 und 34 geleitet. Die Heißluft-Ausgänge der beiden Reaktoren 33 und 34 werden zu einem weiteren Dreiwegventil 38 geleitet und gelangen von diesem zu Wärmetauscher 12', in welchem der im Reaktor 33 oder 34 aufgenommene Wasserdampf kondensiert. Das Kondensat wird wieder über einen Kondensatableiter 17' zur Rauchgasentschwefelungsanlage 5 geleitet, während die trockene Heißluft über ein Gebläse 21 wieder in die Verbrennungsluftleitung vor dem Luftvorwärmer 2 eingespeist wird.

Die Dreiwegventile 35 und 36 einerseits, und die Dreiwegventile 37 und 38 anderseits, werden synchron umgeschaltet.

Die beiden Reaktoren 33 und 34 können z. B. durch Becherwerke zum Transport von Adsorptionsmitteln verbunden und der Reaktor 33 nur als Adsorber und der Reaktor 34 nur als Desorber dienen, wobei die Dreiwegventile 35, 36, 37 und 38 entfallen.

Des weiteren kann anstelle von Heißluft zur Regeneration ein Inertgas verwendet werden.

## Patentansprüche

1. Verfahren zur Gewinnung von Wärme aus wasserdampfhältigen Rauchgasen einer Verbrennungs- bzw. Abgasanlage durch Absorption oder Adsorption mit anschließender Desorption, wobei die Rauchgase durch einen Wärmetauscher zur Vorwärmung der Verbrennungsluft geführt und anschließend zumindest teilweise in eine Rauchgasreinigungsanlage eingeleitet werden, von welcher die gereinigten und wasserdampfangereicherten Rauchgase in eine Ab- bzw. Adsorptionsanlage eingebracht werden, wo die, bei der Ab- bzw. Adsorption freiwerdende Wärme in wählbarem Verhältnis an die Rauchgase und bzw. oder das Ab- bzw. Adsorptionsmittel abgegeben und im Kesselsystem und bzw. oder extern genutzt wird und anschließend das, im Ab- bzw. Adsorptionsmittel aufgenommene Wasser durch Desorption in Dampfform ausgetrieben und dessen Wärmeinhalt im Kesselsystem und bzw. oder extern genutzt wird, wobei der Wasserdampf kondensiert und das Kondensat in die Rauchgasreinigungsanlage zur Wiederverwendung rückgeführt wird.

2. Verfahren nach Anspruch 1, dadurch gekennzeichnet, daß zumindest ein Teil der zur Desorption erforderlichen Wärme vom Kesselsystem der Verbrennungsanlage, z. B. vom Rauchgas vor oder nach dem Luftvorwärmer, von der Verbrennungsluft nach dem Luftvorwärmer, oder vom Dampf des Kesselsystems zugeführt wird.

3. Verfahren nach Anspruch 1, dadurch gekennzeichnet, daß zumindest ein Teil der zur Desorption erforderlichen Wärme wahlweise vom Abdampf nach einer Turbine, vom Rauchgas nach einem Luftvorwärmer, von einem Öl- oder Gasbrenner, von einer Elektroheizung, aus Fremddampf, oder aus Umgebungswärme, vorzugsweise über eine Wärmepumpe, zugeführt wird.

4. Verfahren nach Anspruch 1, dadurch gekennzeichnet, daß zumindest ein Teil des bei der Desorption entstehenben Wasserdampfes dem Kesselsystem zugeführt wird, wobei der entstehende Wasserdampf wahlweise zur Vorerwärmung der Verbrennungsluft, zur Speisewasservorwärmung des Kesselsystems, zur Aufheizung der Rauchgase vor einem Schornstein, oder zur Lieferung der Prozeßwärme für die Rauchgasnachbehandlungsanlage zugeführt wird.

5. Verfahren nach Anspruch 1, dadurch gekennzeichnet, daß zumindest ein Teil der bei der Absorption oder Adsorption freigesetzten Wärme zur Vorerwärmung der Verbrennungsluft oder zur Vorerwärmung des Speisewassers verwendet wird.

6. Vorrichtung zur Durchführung des Verfahrens nach Anspruch 1, wobei ein Rauchgasstrom aus einer Verbrennungs- bzw. Abgasanlage, ein Wärmetauscher (2) zur Luftvorwärmung eine Rauchgasreinigungsanlage (5) und ein Ab- bzw. Adsorber in Form eines Ab- bzw. Adsorptionsturmes (7) und im Kreislauf des Ab- bzw. Adsorptionsmittels ein Desorber (9, 9', 9") vorgesehen ist, der mit einer aus dem abgeführten Wasserdampf Wärme aufnehmenden Einrichtung verbunden ist, an welche ein mit der Rauchgasreinigungsanlage (5) verbundener Kondensatableiter (17, 18, 17', 29) anschließt.

7. Vorrichtung nach Anspruch 6, dadurch gekennzeichnet, daß der Desorber in Form eines Kochers (9) ausgeführt ist.

8. Vorrichtung nach Anspruch 6, dadurch gekennzeichnet, daß der Desorber als Stripp-Anlage (9') ausgeführt ist.

9. Vorrichtung nach Anspruch 6, dadurch gekennzeichnet, daß der Desorber (9') eine Anlage zur Druckerniedrigung im Raum oberhalb des Absorptionsmittels beinhaltet.

10. Vorrichtung nach Anspruch 7, dadurch gekennzeichnet, daß im Kreislauf des Absorptionsmittels (8) zwischen dem Absorptionsturm (7) und dem Kocher (9) ein Wärmetauscher (10) vorgesehen ist.

**Claims**

1. A process and apparatus for recovering heat from flue gases containing water vapour of a combustion or exhaust gas device by absorption or adsorption and subsequent desorption, the flue gases being guided through a heat exchanger in order to preheat the combustion air and subsequently being at least partially introduced into a flue gas purification device, whence the cleaned and water vapour-enriched flue gases are fed into an absorption or adsorption device, where the heat released during the absorption or adsorption is supplied in a selectable ratio to the flue gases and/or the absorption or adsorption means and is used in the boiler system or externally and subsequently the water absorbed in the absorption or adsorption means is released in vapour state by desorption and its heat content is used in the boiler system and/or externally, the water vapour condensing and the condensate being recirculated into the flue gas purification device for further use.

2. A process according to claim 1, characterised in that at least part of the heat necessary for desorption is supplied from the boiler system of the combustion device, e. g. from the flue gas upstream or downstream of the air preheater, from the combustion air downstream of the air preheater, or from the steam of the boiler system.

3. A process according to claim 1, characterised in that at least part of the heat necessary for desorption is selectively supplied from the exhaust steam downstream of a turbine, from the flue gas downstream of an air preheater, from an oil or gas burner, an electric heater, from external steam or atmospheric heat, preferably via a heat pump.

4. A process according to claim 1, characterised in that at least part of the water vapour produced during desorption is supplied to the boiler system, the resulting water vapour being optionally used for preheating the combustion air, for preheating the supply water of the boiler system, for heating the flue gases upstream of a chinmey or for supplying the process heat for the flue gas treatment device.

5. A process according to claim 1, characterised in that as least part of the heat released during absorption or adsorption is used for preheating the combustion air or for preheating the supply water.

6. An apparatus for carrying out the process according to claim 1, a flue gas current from a combustion or exhaust gas device, a heat exchanger (2) for preheating air, a flue gas purification device (5) and an absorber or adsorber in the form of an absorption or adsorption tower (7) and a desorber (9, 9', 9") in the circuit of the absorption or adsorption means being provided, the desorber being connected with a device receiving heat from the drawn-off water vapour, to which device is connected a condensate eliminator (17, 18, 17', 29) connected with the flue gas purification device (5).

7. An apparatus according to claim 6, characterised in that the desorber is designed in the form of a boiler (9).

8. An apparatus according to claim 6, characterised in that the desorber is designed as a stripping device (9').

9. An apparatus according to claim 6, characterised in that the desorber (9") comprises a device for reducing the pressure in the chamber above the absorption means.

10. An apparatus according to claim 7, characterised in that a heat exchanger (10) is provided in the circuit of the absorption means (8) between the absorption tower (7) and the boiler (9).

## Revendications

1. Procédé de production de chaleur à partir de gaz de fumées contenant de la vapeur d'eau d'une installation de combustion ou d'évacuation des gaz brûlés, par absorption ou adsorption suivie d'une désorption, les gaz de fumées étant envoyés à travers un échangeur de chaleur pour préchauffer l'air de combustion, puis introduits au moins partiellement dans une installation d'épuration des gaz, les gaz épurés et enrichis en vapeur d'eau étant introduits dans une installation d'absorption ou d'adsorption où la chaleur dégagée pendant l'absorption ou l'adsorption est cédée, dans une proportion pouvant être sélectionnée, aux gaz et/ou à l'agent d'absorption ou d'adsorption, et utilisée dans le système de la chaudière et/ou à l'extérieur, après quoi l'eau absorbée par l'agent d'absorption ou d'adsorption est évacuée sous forme de vapeur, par désorption, et sa teneur en chaleur est utilisée dans le système de la chaudière et/ou à l'extérieur, la vapeur d'eau étant condensée, et le condensat étant recyclé dans l'installation d'épuration des gaz de fumées pour être réutilisé.

2. Procédé selon la revendication 1, caractérisé en ce qu'une partie au moins de la chaleur nécessaire à la désorption est fournie par le système de chaudière de l'installation de combustion, par exemple par les gaz de fumées en amont ou en aval du préchauffeur d'air, par l'air de combustion en aval du préchauffeur d'air, ou par la vapeur du système de la chaudière.

3. Procédé selon la revendication 1, caractérisé en ce qu'au moins une partie de la chaleur nécessaire à la désorption est fournie au choix par les vapeurs en aval d'une turbine, par les gaz de fumées en aval d'un préchauffeur d'air, par un brûleur à mazout ou à gaz, par un chauffage électrique, à partir de vapeurs fournies de l'extérieur, ou à partir de la chaleur ambiante, de préférence par l'intermédiaire d'une pompe à chaleur.

4. Procédé selon la revendication 1, caractérisé en ce qu'au moins une partie de la vapeur d'eau résultant de la désorption est envoyée au système de la chaudière, la vapeur d'eau ainsi formée étant envoyée pour préchauffer l'air de combustion, pour préchauffer l'eau d'alimentation du système de la chaudière, pour chauffer les gaz de fumées en amont d'une cheminée, ou pour fournir la chaleur de fabrication pour l'installation de traitement des gaz de fumées.

5. Procédé selon la revendication 1, caractérisé en ce qu'au moins une partie de la chaleur libérée au cours de l'absorption ou de l'adsorption est utilisée pour préchauffer l'air de combustion ou pour préchauffer l'eau d'alimentation.

6. Dispositif de mise en œuvre du procédé selon la revendication 1, dans lequel il est prévu un courant de gaz de fumées provenant d'une installation de combustion ou d'une installation d'évacuation des gaz brûlés, un échangeur de chaleur (2) pour le préchauffage de l'air, une installation d'épuration des gaz (5) et un absorbeur ou un adsorbeur sous la forme d'une tour d'absorption ou d'adsorption (7), et dans le circuit de l'agent d'absorption ou d'adsorption, un désorbeur (9, 9', 9") qui est relié à une installation absorbant de la chaleur à partir de la vapeur d'eau évacuée, à laquelle se raccorde un purgeur du condensat (17, 18, 17', 29) relié à l'installation d'épuration des gaz.

7. Dispositif selon la revendication 6, caractérisé en ce que le désorbeur se présente sous la forme d'un appareil à bouillir (9).

8. Dispositif selon la revendication 6, caractérisé en ce que le désorbeur est une installation de stripage (9').

9. Dispositif selon la revendication 6, caractérisé en ce que le désorbeur (9") comprend une installation destinée à réduire la pression dans le volume situé au-dessus de l'agent d'absorption.

10. Dispositif selon la revendication 7, caractérisé en ce qu'il est prévu un échangeur de chaleur (10), dans le circuit de l'agent d'absorption (8), entre la tour d'absorption (7) et l'appareil à bouillir (9).

Fig. 1

EP 0 139 626 B1

Fig. 2

Fig. 3

Fig. 4

Fig. 5

Fig. 6

Fig. 7

Fig. 8